# NOUVEAU FASCICULE DE BREVET EUROPEEN

(11) **EP 2 576 127 B2**
(45) Date de publication et mention de la décision concernant l'opposition: **24.07.2019**
(45) Mention de la délivrance du brevet: 22.01.2014
(21) Numéro de dépôt: 11720772.0
(22) Date de dépôt: 20.05.2011
(51) Int. Cl.: B23K 26/00

(54) **Procédé de gravure d'au moins une rainure formant des amorces de rupture à l'aide d'un dispositif laser à fibre optique**
Verfahren zum Eingravieren von mindestens einer Kerbe als Bruchansätze unter Verwendung einer Anlage zur Laserbearbeitung mit optischen Fasern
Process of engraving at least one groove for forming incipient fractures using a optical fibre laser device

(30) Priorité: 25.05.2010 EP 10163787
(43) Date de publication de la demande: 10.04.2013
(73) Titulaire: Coherent Switzerland AG, 3123 Belp (CH)
(72) Inventeur: DÜRR, Ulrich, CH-3608 Allmendingen (CH); VON NIEDERHÄUSERN, Rudolf, CH-3656 Tschingel ob Gunten (CH); FREI, Bruno, CH-3634 Thierachern (CH)
(74) Mandataire: Schlögl, Markus
(86) Numéro de dépôt international: PCT/EP2011/058254
(87) Numéro de publication internationale: WO 2011/147749

(56) Documents cités:
- WO-A1-2008/070979
- WO-A1-2008/129277
- DE-A1-102007 053 814
- US-A- 5 867 305
- US-A1- 2005 103 763
- US-A1- 2009 107 962

## Description

La présente invention concerne un procédé de gravure d'au moins une rainure à l'aide d'un faisceau laser dans une paroi ou une surface d'une pièce mécanique de manière à définir des amorces de rupture en vue d'un fractionnement de cette pièce mécanique au moins en deux parties tel que défini dans le préambule de la revendication 1 (voir, par exemple, DE 10 2007 053 814). En particulier, la pièce mécanique usinée est une bielle pour moteur à explosion. Ces bielles présentent une ouverture principale et sont formées initialement d'une seule et même pièce. Deux rainures diamétralement opposées sont gravées dans la paroi latérale circulaire de l'ouverture principale. Ensuite, à l'aide de moyens mécaniques, on fractionne en deux parties la bielle par pression. Cette technique est bien connue de l'homme du métier.

L'utilisation d'un faisceau laser pour graver les rainures formant des amorces de rupture présente de nombreux avantages. En particulier, la technologie laser permet d'effectuer une fente relativement étroite et profonde permettant d'obtenir un fractionnement propre selon un plan contenant l'axe géométrique central de l'ouverture principale de la bielle.

### Arrière-plan technologique

Il est connu notamment du document de brevet DE 10 2007 053 814 une installation d'usinage laser à fibre optique. Comme mentionné aux paragraphes 3 et 4 de ce document, divers types de laser ont été utilisés pour l'application spécifique en question, mais le profil des rainures obtenues n'est pas optimal. La qualité des rainures usinées est déterminante pour obtenir d'une part un fractionnement propre selon un plan géométrique déterminé et également pour permettre un tel fractionnement avec une moindre force. Le document de brevet allemand susmentionné propose d'utiliser dans l'installation d'usinage un dispositif laser d'un type particulier, à savoir un laser à fibre optique. De préférence, le laser à fibre optique comprend un ensemble de diodes pour pomper le milieu actif (fibre dopée). L'utilisation de moyens de pompage à diodes permet notamment d'augmenter la fréquence des impulsions fournies par le dispositif laser dans un mode pulsé proposé. Selon le paragraphe 31 du document DE 10 2007 053 814, l'ensemble de diodes formant les moyens de pompage fonctionne de manière pulsée. La fréquence des impulsions laser produites peut être située dans un domaine de travail compris notamment entre 10 et 100 kHz. Ce document de l'art antérieur propose donc d'utiliser un laser à fibre optique fonctionnant dans un mode pulsé, c'est-à-dire dans un mode où les moyens de pompage sont alimentés de manière pulsée pour moduler le faisceau laser engendré en sortie du dispositif laser. Ainsi, un mode pulsé consiste en une modulation de la puissance continue (cw) du laser de sorte que la puissance maximale des impulsions est égale à la puissance cw du laser (puissance moyenne maximale).

Le dispositif laser proposé dans le document DE 10 2007 053 814 ne permet pas d'obtenir des rainures présentant un profil aussi optimal que souhaité. L'utilisation d'un laser à fibre optique est une solution avantageuse permettant d'obtenir un faisceau laser de bonne qualité, nécessaire pour l'usinage d'une rainure étroite et profonde. En effet, un laser à fibre optique permet de produire un faisceau laser de haute qualité peu dégradé lors de sa propagation dans une fibre optique à bas mode (de préférence monomode) jusqu'à une tête d'usinage de l'installation d'usinage laser. Par contre, le mode pulsé proposé dans le document de brevet susmentionné limite fortement le potentiel résultant de l'utilisation d'un laser à fibre optique, en particulier en ce qui concerne le rapport profondeur / largeur de la rainure, la qualité métallurgique des parois et le rayon en fond de rainure.

Un but de la présente invention est d'améliorer le procédé de gravure de rainures formant des amorces de rupture permettant notamment de diminuer les contraintes thermiques parasites qui ont plusieurs conséquences néfastes pour la formation d'une rainure et dans la région environnant cette rainure (telles que la transformation de la structure métallurgique dans les deux parois de la rainure et l'apparition de microfissures dans ces parois). Un autre but de la présente invention est d'augmenter l'efficacité d'usinage des rainures dans la paroi latérale de bielles en permettant notamment l'utilisation d'un procédé simplifié ou/et un procédé permettant d'augmenter la rapidité d'usinage et/ou de limiter les mouvements de la tête d'usinage pour usiner deux rainures diamétralement opposées dans l'ouverture principale d'une bielle.

### Résumé de l'invention

Dans le cadre du développement du procédé de gravure laser selon la présente invention, les inventeurs ont observé que l'emploi dans le procédé d'un dispositif laser à fibre optique fonctionnant dans un mode pulsé ne permet pas d'obtenir une rainure avec un profil présentant un faible rapport entre la largeur de cette rainure et sa profondeur et également un faible rayon au fond de la rainure, lequel est déterminant pour diminuer la force nécessaire au fractionnement de la pièce mécanique et également pour assurer une rupture dans un plan géométrique défini. Le désavantage du dispositif laser proposé dans le document de l'art antérieur susmentionné provient principalement de deux inconvénients du mode de fonctionnement proposé. Premièrement, le mode pulsé proposé permet seulement de moduler le faisceau laser engendré pour fournir des impulsions présentant une puissance maximale ou puissance de crête correspondant à la puissance en continu (cw) que le laser peut fournir. Dans le document de l'art antérieur cité, la puissance des impulsions est comprise entre 10 et 100 Watts (W), de préférence entre 40 et 60 W. Pour de grosses bielles, il est proposé d'utiliser des lasers plus puissants permettant de fournir une puissance de crête d'environ 200 W (A noter que des lasers cw de plus grande puissance existent, mais ils ne sont économiquement pas utilisables dans l'industrie). On notera que dans un mode pulsé tel que proposé dans le document de l'art antérieur cité, l'obtention d'impulsions présentant une puissance de crête d'environ 200 W nécessite l'utilisation de lasers très puissants aux limites de la technologie actuelle pour des lasers industriels.

Des impulsions laser présentant des puissances maximales sensiblement égales à 200 W ou inférieures, avec des durées d'impulsions relativement longues pour apporter l'énergie suffisante à l'ablation de matière, engendrent en grande partie la fusion de la matière formant la pièce mécanique usinée. Cette matière en fusion pose un problème pour obtenir une rainure de qualité. Il est notamment nécessaire de l'évacuer à l'aide d'un jet de gaz sous forte pression. Cette matière en fusion pose aussi un problème de propreté de la rainure et de la surface usinée, ainsi que du verre de protection à la sortie de la tête d'usinage. De plus, cette matière en fusion et son éjection à l'aide d'un gaz sous pression limite la réduction du rayon de courbure au fond de la rainure malgré la haute qualité du faisceau laser produit par l'installation laser à fibre optique.

Ensuite, un autre problème posé par le mode de fonctionnement prévu dans le document cité provient du fait que la durée des impulsions fournies est généralement située dans le domaine des microsecondes (µs), c'est-à-dire supérieure à une microseconde. En particulier, des diodes fonctionnant en mode pulsé peuvent fournir des impulsions dont la durée est située entre 5 et 10 microsecondes. Contrairement à l'affirmation du document susmentionné, une augmentation de la fréquence n'engendre pas forcément une diminution de la quantité d'énergie par impulsion. La quantité d'énergie contenue dans chaque impulsion laser est déterminée d'une part par la puissance et d'autre part par la durée de cette impulsion. Certes une haute fréquence conduit en général à une diminution de la durée des impulsions pour une puissance moyenne donnée, mais le mode pulsé proposé ne permet pas de diminuer cette durée en dessous de 1 µs dans une installation classique; ce qui pose un problème d'effets thermiques secondaires négatifs. En effet, la diffusion de la chaleur dans la matière usinée dépend de cette durée d'impulsion. Plus cette durée est grande, plus les effets thermiques secondaires sont importants ; en particulier la propagation de l'énergie thermique dans la région de la rainure usinée augmente. Il en résulte premièrement une augmentation de la matière en fusion, ce qui conduit à une rainure avec une plus grande largeur et présentant un rayon de courbure moyen en son fond relativement grand. Ainsi, bien que l'énergie totale par impulsion soit sensiblement correcte avec une puissance d'environ 100 W et une durée d'impulsion de quelques microsecondes, le profil de la rainure obtenue n'est pas optimal.

Dans le cadre du présent développement les inventeurs ont montré qu'une augmentation substantielle de la puissance de crête des impulsions laser fournies permet de diminuer la quantité de matière en fusion en augmentant la quantité de matière sublimée. De plus, en augmentant la puissance des impulsions, il est possible de fournir l'énergie nécessaire par impulsion avec une durée d'impulsion inférieure ; ce qui permet de diminuer les contraintes thermiques à la périphérie de la rainure et également de diminuer le rayon de courbure au fond de celle-ci.

La présente invention a donc pour objet un procédé de gravure ayant les caractéristiques de la revendication 1 ou les caractéristiques de la revendication 2.

Selon un mode de réalisation particulier, le dispositif laser à fibre optique est commandé dans un mode qcw (de l'anglais : quasi continuous wave). Un dispositif laser à fibre optique commandé en mode qcw permet d'obtenir par exemple des impulsions ayant une puissance maximale ou puissance de crête dix fois supérieure à la puissance moyenne maximale du dispositif laser.

Selon un mode de réalisation préféré, le dispositif laser à fibre optique est commandé dans un mode déclenché (nommé « Q-Switch » en anglais). Selon un autre mode de réalisation préféré, le dispositif laser à fibre optique comprend une source d'impulsions laser initiales (nommée « Seed Laser » en anglais), par exemple une diode fournissant des impulsions dans le domaine des nanosecondes, et au moins un milieu amplificateur à fibre optique fournissant en sortie les impulsions laser d'usinage.

Grâce aux caractéristiques de l'invention, il est possible d'usiner des rainures très étroites et relativement profondes présentant un rayon de fond de rainure très petit. Les impulsions laser fournies par le dispositif laser à fibre optique utilisé dans le procédé de gravure selon la présente invention permettent de diminuer la quantité de matière en fusion et également de limiter de manière significative les effets thermiques parasites qui sont responsables notamment de la détérioration de la qualité des rainures obtenues.

### Brèves description des dessins

La présente invention sera décrite de manière plus détaillée à l'aide de la description suivante, faite en référence aux dessins annexés, donnés à titre d'exemples schématiques nullement limitatifs, dans lesquels :
- la Figure 1 représente schématiquement une bielle et un dispositif laser à fibre optique associé à une tête d'usinage de rainures ;
- la Figure 2A représente schématiquement une vue en perspective d'une rainure (représentation partielle) usinée à l'aide d'un dispositif de l'art antérieur ;
- la Figure 2B est une vue schématique similaire à celle de la figure 2A mais représentant une rainure obtenue par le procédé d'usinage laser selon la présente invention ;
- la Figure 3 montre schématiquement en coupe un premier mode de réalisation particulier d'une tête d'usinage d'une installation laser ;
- la Figure 4 représente schématiquement en coupe un deuxième mode de réalisation particulier d'une tête d'usinage d'une installation laser ;

### Description détaillée de l'invention

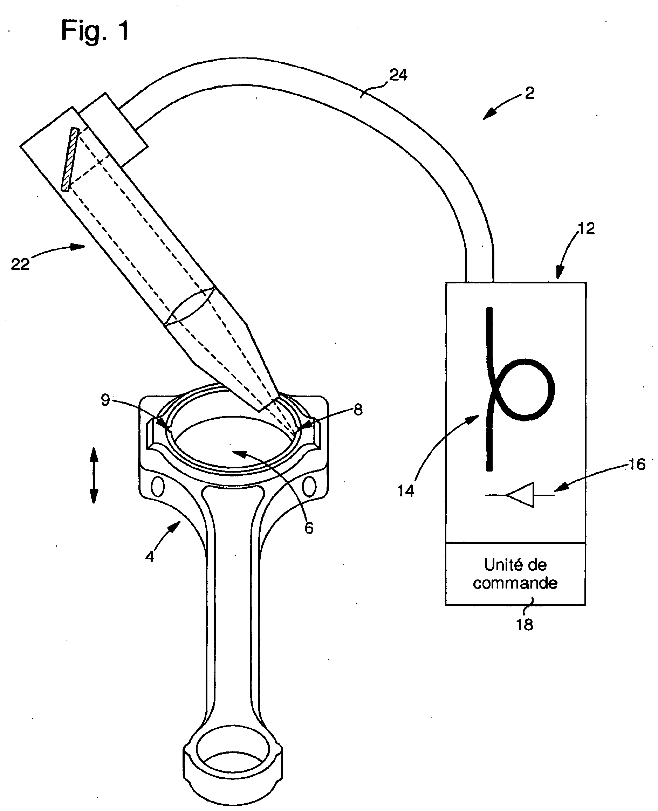

A la Figure 1 est représentée schématiquement une installation d'usinage laser 2 pour effectuer des rainures 8 et 9 dans la paroi latérale de l'ouverture principale 6 d'une bielle 4. Ces rainures sont orientées selon l'axe géométrique central de l'ouverture principale. L'installation comprend un dispositif laser à fibre optique 12 relié à une tête d'usinage 22 par un câble optique flexible 24. La tête d'usinage 22 et la bielle 4 sont associés à des moyens motorisés (non représentés) de déplacement relatif selon ledit axe géométrique central pour pouvoir graver les rainures. Le dispositif laser 12 comprend un milieu actif à fibre optique 14 connu de l'homme du métier et des moyens de pompage 16 formés de diodes optiques couplées au milieu actif. Ce dispositif comprend une unité de commande 18 qui gère l'alimentation des moyens de pompage optique et d'autres paramètres selon le mode de fonctionnement sélectionné. De manière générale, il est prévu de fournir une série d'impulsions laser

L'utilisation d'un laser à fibre optique présente plusieurs avantages relatifs à la qualité du faisceau laser obtenu. De plus, le faisceau peut être amené à la tête d'usinage par un câble optique à bas mode tout en conservant une bonne qualité optique de ce faisceau, ce qui simplifie l'installation. La qualité du faisceau est importante pour permettre une bonne focalisation (même avec un faisceau laser incident sur l'optique de focalisation avec un relativement petit diamètre) et donc de diminuer le diamètre de ce faisceau au point focal. Ceci doit permettre de réaliser des rainures étroites. Cependant, pour effectuer une rainure étroite et suffisamment profonde, avec des parois définissant un angle aigu et un faible rayon au fond de cette rainure, d'autres paramètres que la qualité du faisceau interviennent également. Comme déjà mentionné précédemment, la gestion de l'apport d'énergie et en particulier la gestion de l'intensité lumineuse, c'est-à-dire la densité de puissance, sont déterminantes pour usiner une telle rainure avec un profil optimal. La manière dont l'ablation de matière dans la paroi de la bielle est effectuée est essentielle pour avoir ce profil optimal.

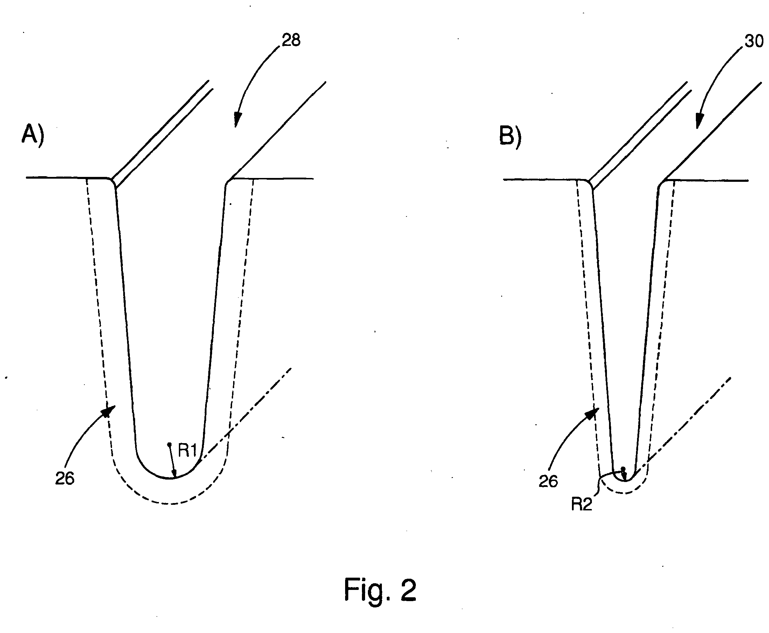

Il résulte de l'utilisation d'un dispositif laser à fibre optique fonctionnant dans un mode pulsé par modulation de la puissance de pompage du milieu actif, comme proposé dans l'art antérieur, des impulsions dont la puissance de crête correspond à la puissance nominale du laser, qui est généralement inférieure à 200 W pour un laser à fibre optique industriel, et dont la durée est supérieure à 1 µs. Cette relativement faible puissance ne permet pas d'obtenir une intensité lumineuse suffisante pour éviter qu'une grande partie de la matière recevant l'impulsion laser fusionne et passe donc dans un état liquide. Cette matière liquide en fusion pose un problème d'évacuation et tend à rester en partie au fond de la rainure. Il en résulte ainsi un rayon de courbure moyen R1 relativement grand au fond de la rainure, comme cela est représenté schématiquement à la Figure 2A. De plus, la durée relativement longue des impulsions engendre aussi des effets secondaires thermiques ou contraintes thermiques dans la matière, l'énergie thermique se propageant plus loin dans la région périphérique 26 de la rainure 28 usinée. Ainsi, la matière en fusion, la quantité d'énergie apportée par chaque impulsion laser et la durée de celle-ci participent ensemble à un élargissement de la rainure et à un rayon moyen R1 relativement grand en fond de rainure.

Il résulte des conclusions mises en lumière dans le cadre du présent développement la sélection d'une commande particulière du dispositif laser à fibre optique. Selon l'invention, le procédé utilise un dispositif laser à fibre optique qui est commandé de manière que les impulsions laser présentent une puissance de crête supérieure à 400 W et au moins deux fois supérieure à la puissance moyenne maximale de ce dispositif laser et de manière que la durée des impulsions laser est dans le domaine des nanosecondes (ns), c'est-à-dire entre 1 ns et 1000 ns, ou inférieure.

Selon un premier mode de fonctionnement du dispositif laser à fibre optique selon le procédé de la présente invention, ce dispositif laser est commandé dans un mode qcw (de l'anglais 'quasi continuous wave'). Pour un laser d'une puissance comprise entre 50 W et 150 W, on obtient aisément des impulsions avec une puissance de crête de l'ordre de 1000 W (1 kW). Selon la variante et l'application, le dispositif laser est agencé pour obtenir des puissances de crête ou puissance maximale des impulsions entre 400 W et environ 3000 W (3 kW). L'homme du métier des lasers à fibre optique sait implémenter une commande qcw et les diodes spécifiques pour obtenir de telles impulsions laser.

Pour obtenir de courtes impulsions dans le domaine des nanosecondes, en particulier entre 50 ns et 400 ns, avec des pics de puissance très élevés, deux variantes principales décrites ci-après ont été envisagées.

Selon un deuxième mode de fonctionnement, le dispositif laser à fibre optique est commandé dans un mode déclenché ou Q-Switch (dénomination anglophone). Ce deuxième mode de fonctionnement est préféré car il permet avantageusement d'une part d'obtenir aisément des durées d'impulsion significativement inférieures au mode qcw du premier mode de fonctionnement proposé et, d'autre part, des puissances de crête bien plus élevées, par exemple de l'ordre de 10 kW. Il est donc possible d'obtenir de très hautes intensités lumineuses permettant de sublimer la matière de la pièce mécanique usinée, c'est-à-dire de passer directement d'un état solide à un état gazeux. Par exemple, le dispositif laser à fibre optique est commandé de manière à fournir les impulsions laser avec une fréquence comprise entre 10 kHz et 200 kHz. Comme la durée des impulsions est très courte, on limite aussi la quantité d'énergie apportée par impulsion. Cette quantité d'énergie peut être ajustée pour optimiser le procédé d'usinage laser selon la présente invention, notamment entre 0,1 mJ et 2 mJ. La durée des impulsions étant très courte, on limite fortement les effets secondaires thermiques et la pénétration de l'énergie thermique dans la matière. Ceci permet d'obtenir une rainure très étroite et relativement profonde avec un profil optimal, comme représenté schématiquement à la Figure 2B. Les perforations effectuées sont plus étroites que celles obtenues dans l'art antérieur. Le rapport largeur / profondeur de la rainure 30 usinée est inférieur à celui obtenu avec un dispositif laser de l'art antérieur et le rayon de courbure moyen R2 en fond de rainure est significativement inférieur à celui (R1) de la Figure 2A. Tout ceci conduit d'une part à une rainure propre avec un minimum de matière rejetée sur la paroi de l'ouverture en bordure de la rainure et à une meilleure amorce de rupture pour le fractionnement ultérieur en deux parties de la pièce mécanique.

Selon un troisième de réalisation également préféré, le dispositif laser à fibre optique comprend une source d'impulsions laser initiales (nommée 'Seed Laser' en anglais) et au moins un milieu amplificateur à fibre optique fournissant en sortie les impulsions laser d'usinage. Les impulsions laser initiales forment des impulsions de faible puissance pouvant être produites avec de très courte durée et à très haute fréquence, par exemple à 10 MHz. Ces impulsions initiales sont introduites en entrée du milieu amplificateur à fibre optique qui conserve sensiblement la durée et également la fréquence des impulsions initiales et qui amplifie fortement la puissance de l'impulsion. Ces moyens d'amplification permettent d'obtenir aisément des puissances de crête supérieures à 1000 W. L'homme du métier sait construire un tel dispositif laser à fibre optique.

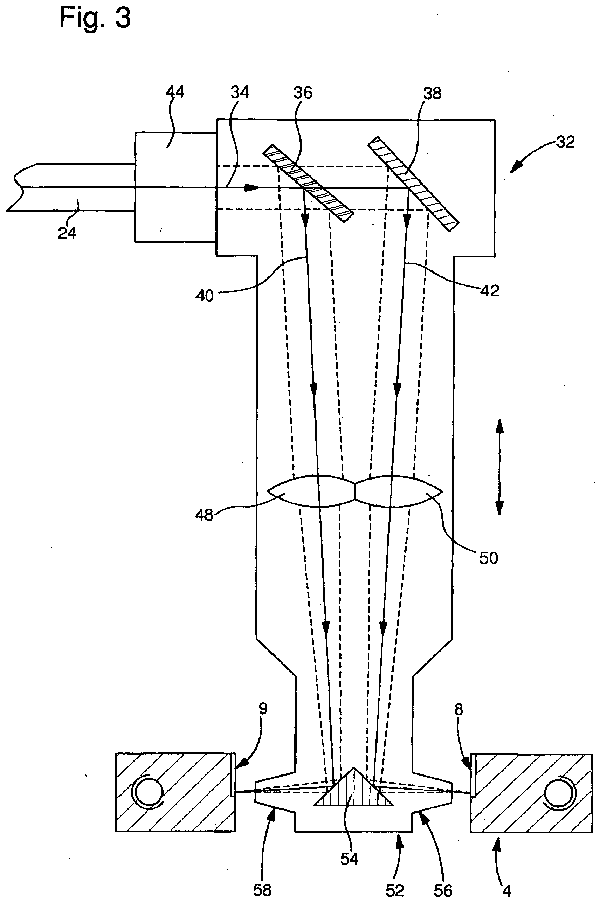

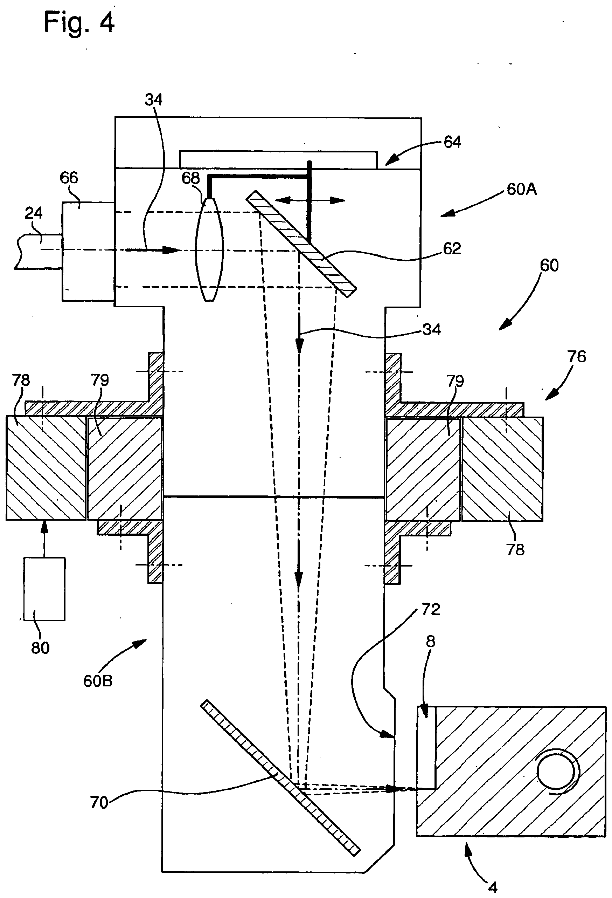

Le procédé d'usinage selon l'invention présente encore d'autres avantages. Premièrement, la génération d'impulsions de très haute puissance permet d'envisager l'usinage simultané des deux rainures diamétralement opposées dans une bielle, en particulier en partageant l'énergie de chaque impulsion laser primaire en deux impulsions secondaires dont la puissance est deux fois inférieure à cette impulsion laser primaire, tout en conservant les autres bénéfices de l'invention. Une tête d'usinage particulière représentée à la Figure 3 est une réalisation particulière utilisant cet avantage supplémentaire. Deuxièmement, comme la matière en fusion est fortement limitée, voire supprimée dans l'installation laser selon l'invention, l'utilisation d'un gaz sous forte pression comme dans l'art antérieur n'est plus nécessaire. Ainsi, on n'est plus tenu à l'utilisation de buses présentant un petit orifice pour injecter sous haute pression le gaz à l'endroit d'impact du faisceau laser sur la paroi de la pièce mécanique usinée. On peut néanmoins conserver l'apport d'un gaz dans le but de maintenir propre la tête d'usinage, mais un tel gaz peut présenter une faible pression et s'étendre sur une plus large région. Deux têtes d'usinage particulières représentées respectivement aux Figures 4 et 5 sont des réalisations tirant profit de cet autre avantage supplémentaire.

La tête d'usinage 32 représentée à la Figure 3 est reliée au câble optique 24 et reçoit en entrée un faisceau laser 34 formé d'impulsions laser selon l'invention. Cette tête d'usinage comprend en entrée un collimateur 44 du faisceau laser sortant de la fibre optique avec une grande ouverture, un premier miroir semi-transparent, servant à diviser en deux faisceaux secondaires 40 et 42 le faisceau primaire 34, et un deuxième miroir 38 pour renvoyer le faisceau secondaire 42 sensiblement dans une direction axiale. A chacun des deux faisceaux secondaires sont associés des moyens optiques de focalisation représentés schématiquement par une lentille convergente 48, respectivement 50 pour focaliser ces deux faisceaux secondaires sur la paroi latérale de la bielle 4. Pour ajuster les points de focalisation respectifs des deux faisceaux secondaires, les lentilles 48 et 50 peuvent de préférence être déplacées verticalement. On notera que, grâce à la bonne qualité du faisceau laser produit par le laser à fibre optique, une très bonne focalisation peut être obtenue avec un faisceau laser incident sur les moyens de focalisation de relativement petit diamètre. Ainsi, les lentilles convergentes peuvent avoir un relativement petit diamètre et la tête peut conserver une forme compacte. La partie terminale 52 de la tête d'usinage introduite dans l'ouverture de la bielle 4 comprend un miroir 54 présentant deux surfaces réfléchissantes inclinées pour dévier les deux faisceaux secondaires selon une direction sensiblement perpendiculaire à la surface latérale de l'ouverture de la bielle et respectivement selon deux sens opposés pour usiner simultanément deux rainures 8 et 9 diamétralement opposées. Les deux faisceaux laser secondaires sortent de la partie terminale 52 respectivement par deux ouvertures terminales diamétralement opposées, définies par les orifices de deux buses 56 et 58, en se propageant dans un même plan géométrique. Dans une variante, les surfaces réfléchissantes du miroir prismatique 54 présentent chacune une inclinaison qui renvoie le faisceau secondaire incident obliquement à la surface latérale usinée. De manière connue, un gaz peut être apporté à l'intérieur de la tête d'usinage et sortir par ces deux buses de forme classique. Un seul mouvement vertical relatif entre la bielle 4 et la tête d'usinage 32 permet d'usiner en parallèle les deux rainures 8 et 9.

La tête d'usinage 60 représentée à la Figure 4 est reliée au câble optique 24 et reçoit en entrée un faisceau laser 34 formé d'impulsions laser selon l'invention. Cette tête d'usinage comprend en entrée un collimateur 66 du faisceau laser sortant de la fibre optique avec une grande ouverture, un miroir amovible 62 associé à des moyens motorisés 64 permettant un déplacement linéaire de ce miroir 62 qui renvoie le faisceau 34 selon une direction parallèle à l'axe longitudinal de la tête d'usinage, et des moyens de focalisation 68 (représenté par une lentille convergente) solidaires du miroir amovible. On notera que dans une variante, les moyens de focalisation sont avantageusement agencés à la suite du miroir amovible, plus proche de la surface latérale usinée. De préférence, ils peuvent être déplacés relativement au miroir 62 pour ajuster la position du point focal. Finalement, le faisceau aboutit sur un miroir incliné 70 agencé à l'extrémité de la tête d'usinage. Ce miroir 70 est orienté de manière que le plan d'incidence du faisceau laser soit parallèle à la direction de déplacement du miroir 62. Le faisceau réfléchi par le miroir 70 sort de la tête par une fente terminale 72 dont la hauteur est au moins égale à la longueur de la rainure 8 prévue, c'est-à-dire égale ou un peu supérieure à la hauteur de la bielle. Le miroir amovible 62, en se déplaçant, engendre un balayement vertical de la paroi de l'ouverture de la bielle 4 par le faisceau laser. Ainsi le faisceau se déplace progressivement le long de la fente terminale 72 pour usiner la rainure 8 sans aucun mouvement vertical relatif entre la tête d'usinage 60 et la bielle 4. La tête d'usinage est donc maintenue dans une position fixe lors de l'usinage laser d'une rainure. La fente terminale ne pose pas ici de problème particulier étant donné qu'aucun gaz sous forte pression pour l'évacuation d'une matière en fusion n'est prévu. On peut cependant prévoir d'injecter par la fente 72 un gaz sous faible pression pour protéger le verre de protection agencé au niveau de cette fente. Dans une variante, un jet de gaz est injecté entre la paroi de la bielle et la fente terminale depuis dessus ou dessous selon le sens d'usinage. La tête d'usinage est réalisée en deux parties 60A et 60B, la partie supérieure 60A étant fixe (ou mobile selon une direction linéaire horizontale) et la partie inférieure 60B pouvant subir une rotation pour permettre d'usiner la rainure diamétralement opposée sans devoir tourner la partie supérieure reliée au câble optique. Pour tourner la partie inférieure, il est prévu un moteur couple 76 avec sa partie statorique 78 reliée à la partie fixe 60A et sa partie rotorique 79 reliée à la partie tournante 60B. Ce moteur présente une ouverture centrale pour le passage du faisceau laser et est actionné par une unité de commande programmable 80 servant à son alimentation électrique.

## Revendications

1. Procédé de gravure d'au moins une rainure (8, 9 ;30)
dans une paroi latérale ou une surface d'une pièce
mécanique (4 ;84) au moyen d'impulsions laser fournies
par un dispositif laser à fibre optique, cette rainure
définissant une amorce de rupture en vue d'un
fractionnement ultérieur de cette pièce mécanique en au moins deux parties,
ce procédé de gravure étant **caractérisé en ce que**
le dispositif laser à fibre optique est commandé de
manière que lesdites impulsions laser présentent
une puissance de crête supérieure à 400 W et au
moins deux fois supérieure à la puissance moyenne
maximale dudit dispositif laser, **en ce que** la durée
desdites impulsions laser est dans le domaine des
nanosecondes (1 ns à 1000 ns) ou inférieure **et en ce que** ladite pièce mécanique est une bielle dans l'ouverture principale
de laquelle il est prévu de graver simultanément deux rainures diamétralement opposées **et en ce que** un faisceau laser primaire entrant est divisé en deux faisceaux laser secondaires distincts (40,42) au moyen d'une tête d'usinage (32) équipée d'un miroir semi-transparent (36), les deux faisceaux laser secondaires distincts (40,42) étant respectivement incidents sur deux surfaces d'un miroir (54), les deux surfaces étant réfléchissantes inclinées, ces deux faisceaux laser secondaires sortant ensuite respectivement par deux ouvertures terminales diamétralement opposées de la tête d'usinage en se propageant dans un même plan géométrique.

2. Procédé de gravure d'au moins une rainure (8, 9 ;30)
dans une paroi latérale ou une surface d'une pièce
mécanique (4 ;84) au moyen d'impulsions laser fournies
par un dispositif laser à fibre optique, cette rainure
définissant une amorce de rupture en vue d'un
fractionnement ultérieur de cette pièce mécanique en au moins deux parties,
ce procédé de gravure étant **caractérisé en ce que**
le dispositif laser à fibre optique est commandé de
manière que lesdites impulsions laser présentent
une puissance de crête supérieure à 400 W et au
moins deux fois supérieure à la puissance moyenne
maximale dudit dispositif laser, **en ce que** la durée
desdites impulsions laser est dans le domaine des
nanosecondes (1 ns à 1000 ns) ou inférieure **et en ce que** une
tête d'usinage (60) présentent une fente terminale (72) dont la hauteur est au moins égale à la longueur desdites rainures usinées, cette tête d'usinage comprenant un miroir amovible (62) et des moyens de focalisation (68) solidaire de ce miroir qui sont déplacés de manière linéaire de sorte que le faisceau laser sort par ladite fente terminale en se déplaçant progressivement le long de cette fente terminale, la tête d'usinage étant maintenue dans une position fixe lors de l'usinage laser de ladite rainure rectiligne dans ladite pièce mécanique.

3. Procédé de gravure selon la revendication 1 ou 2, **caractérisé en ce que** ledit dispositif laser à fibre optique fonctionne dans un mode « qcw » (de l'anglais 'quasi continuous wave').

4. Procédé de gravure selon la revendication 3, **caractérisé en ce que** lesdites impulsions laser présentent une puissance de crête comprise entre 400 W et 3000 W (3 kW).

5. Procédé de gravure selon la revendication 1 ou 2, **caractérisé en ce que** ledit dispositif laser à fibre optique est commandé dans un mode déclenché (Q-Switch).

6. Procédé de gravure selon la revendication 1 ou 2, **caractérisé en ce que** ledit dispositif laser à fibre optique comprend une source d'impulsions laser initiales (Seed Laser) et au moins un milieu amplificateur à fibre optique fournissant en sortie lesdites impulsions laser.

7. Procédé de gravure selon la revendication 5 ou 6, **caractérisé en ce que** ledit dispositif laser est commandé de manière que la durée desdites impulsions laser soit entre 50 ns et 400 ns.

8. Procédé de gravure selon l'une des revendications 5 à 7, **caractérisé en ce que** ledit dispositif laser à fibre optique est commandé de manière à fournir lesdites impulsions laser avec une puissance de crête supérieure à 1000 W (1 kW).

9. Procédé de gravure selon l'une des revendications 5 à 8, **caractérisé en ce que** ledit dispositif laser à fibre optique est commandé de manière à fournir lesdites impulsions laser avec une fréquence comprise entre 10 kHz et 200 kHz.

10. Procédé de gravure selon l'une des revendications précédentes, **caractérisé en ce qu'**il est prévu un câble optique à bas mode entre ledit dispositif laser et une tête d'usinage à laquelle sont fournies lesdites impulsions laser.

## Patentansprüche

1. Verfahren zum Eingravieren mindestens einer Kerbe (8, 9; 30) in eine seitliche Wand oder eine Oberfläche eines mechanischen Teils (4; 84) anhand von Laserimpulsen, die durch eine optische Faserlaservorrichtung bereitgestellt werden, wobei diese Kerbe einen Ausgangspunkt für einen Bruch im Hinblick auf eine nachträgliche Aufteilung dieses mechanischen Teils in mindestens zwei Teile definiert, wobei dieses Verfahren zum Eingravieren **dadurch gekennzeichnet ist, dass** die optische Faserlaservorrichtung derart gesteuert wird, dass die Laserimpulse eine Spitzenleistung aufweisen, die größer als 400 W und mindestens größer als zweimal die maximale mittlere Leistung der Laservorrichtung ist, dass die Dauer dieser Laserimpulse im oder unterhalb des Nanosekundenbereichs (1 ns bis 1000 ns) liegt, und dass das mechanische Teil eine Pleuelstange ist, in deren Hauptöffnung gleichzeitig zwei diametral gegenüberliegende Kerben eingraviert werden sollen, und dass ein eintretender primärer Laserstrahl anhand eines Bearbeitungskopfs (32), der mit einem halbdurchsichtigen (36) Spiegel ausgestattet ist, in zwei getrennte sekundäre Laserstrahlen (40, 42) unterteilt wird, wobei die beiden getrennten sekundären Laserstrahlen (40, 42) jeweils auf zwei Oberflächen eines Spiegels (54) einfallen, wobei die beiden Oberflächen geneigt reflektierend sind, wobei diese beiden sekundären Laserstrahlen dann jeweils durch zwei diametral gegenüberliegende Endöffnungen des Bearbeitungskopfs austreten und sich dabei in derselben geometrischen Ebene ausbreiten.

2. Verfahren zum Eingravieren mindestens einer Kerbe (8, 9; 30) in eine seitliche Wand oder eine Oberfläche eines mechanischen Teils (4; 84) anhand von Laserimpulsen, die durch eine optische Faserlaservorrichtung bereitgestellt werden, wobei diese Kerbe einen Ausgangspunkt für einen Bruch im Hinblick auf eine nachträgliche Aufteilung dieses mechanischen Teils in mindestens zwei Teile definiert, wobei dieses Verfahren zum Eingravieren **dadurch gekennzeichnet ist, dass** die optische Faserlaservorrichtung derart gesteuert wird, dass die Laserimpulse eine Spitzenleistung aufweisen, die größer als 400 W und mindestens größer als zweimal die maximale mittlere Leistung der Laservorrichtung ist, dass die Dauer dieser Laserimpulse im oder unterhalb des Nanosekundenbereichs (1 ns bis 1000 ns) liegt, und dass ein Verarbeitungskopf (60) einen Endschlitz (72) aufweist, dessen Höhe mindestens gleich der Länge der bearbeiteten Kerben ist, wobei dieser Bearbeitungskopf einen abnehmbaren Spiegel (62) und Fokussierungsmittel (68) umfasst, die mit diesem Spiegel einstückig sind und die linear bewegt werden, so dass der Laserstrahl durch den Endschlitz austritt, indem er sich allmählich entlang dieses Endschlitzes bewegt, wobei der Bearbeitungskopf während der Laserbearbeitung der geradlinigen Kerbe in dem mechanischen Teil in einer feststehenden Position gehalten wird.

3. Verfahren zum Eingravieren nach Anspruch 1 oder 2, **dadurch gekennzeichnet, dass** die optische Faserlaservorrichtung in einem "qcw-" Betrieb arbeitet (aus dem Englischen "quasi continuous wave").

4. Verfahren zum Eingravieren nach Anspruch 3, **dadurch gekennzeichnet, dass** die Laserimpulse eine Spitzenleistung zwischen 400 W und 3000 W (3 kW) aufweisen.

5. Verfahren zum Eingravieren nach Anspruch 1 oder 2, **dadurch gekennzeichnet, dass** die optische Faserlaservorrichtung in einem gütegeschalteten Betrieb (Q-Switch) gesteuert wird.

6. Verfahren zum Eingravieren nach Anspruch 1 oder 2, **dadurch gekennzeichnet, dass** die optische Faserlaservorrichtung eine Quelle von anfänglichen Laserimpulsen ("seed laser") und mindestens ein faseroptisches Verstärkungsmedium, das die Laserimpulse am Ausgang bereitstellt, umfasst.

7. Verfahren zum Eingravieren nach Anspruch 5 oder 6, **dadurch gekennzeichnet, dass** die Laservorrichtung derart gesteuert wird, dass die Dauer der Laserimpulse 50 ns bis 400 ns beträgt.

8. Verfahren zum Eingravieren nach einem der Ansprüche 5 bis 7, **dadurch gekennzeichnet, dass** die optische Faserlaservorrichtung derart gesteuert wird, dass sie Laserimpulse mit einer Spitzenleistung, die größer als 1000 W (1 kW) ist, bereitgestellt.

9. Verfahren zum Eingravieren nach einem der Ansprüche 5 bis 8, **dadurch gekennzeichnet, dass** die optische Faserlaservorrichtung derart gesteuert wird, dass sie die Laserimpulse mit einer Frequenz zwischen 10 kHz und 200 kHz bereitgestellt.

10. Verfahren zum Eingravieren nach einem der vorhergehenden Ansprüche, **dadurch gekennzeichnet, dass** zwischen der Laservorrichtung und einem Bearbeitungskopf, dem die Laserimpulse bereitgestellt werden, ein Grundmode-Lichtleiterkabel vorgesehen ist.

## Claims

1. Method of engraving at least one groove (8, 9; 30) in a lateral wall or a surface of a mechanical part (4; 84) by means of laser pulses provided by an optical fibre laser device, this groove defining an incipient fracture for the purpose of an ulterior fracturing of this mechanical part into at least two parts,
this engraving method being **characterised in that** the optical fibre laser device is controlled in such a way that said laser pulses have a peak power greater than 400W and at least twice as much as the average maximum power of said laser device, **in that** the duration of said laser pulses is in the region of nanoseconds (1ns to 1000ns) or lower **and in that** said mechanical part is a rod in the main opening of which it is provided to simultaneously engrave two diametrically opposed grooves **and in that** an incoming primary laser beam is divided into two distinct secondary laser beams (40,42) by means of a machining head (32) equipped with a semitransparent mirror (36), the two distinct secondary laser beams (40, 42) being respectively incident on two surfaces of a mirror (54), the two surfaces being reflective and inclined, these two secondary laser beams then exiting respectively through two diametrically opposed terminal openings of the machining head propagating themselves in a same geometric plane.

2. Method of engraving at least one groove (8, 9; 30) in a lateral wall or a surface of a mechanical part (4; 84) by means of laser pulses provided by an optical fibre laser device, this groove defining an incipient fracture for the purpose of an ulterior fracturing of this mechanical part into at least two parts,
this engraving method being **characterised in that** the optical fibre laser device is controlled in such a way that said laser pulses have a peak power greater than 400W and at least twice the maximum average power of said laser device, **in that** the duration of said laser pulses is in the range of nanoseconds (1ns to 1000ns) or lower **and in that** a machining head (60) has a terminal slit (72) the height of which is at least equal to the length of said machined grooves, this machining head comprising a removable mirror (62) and focusing means (68) integral with this mirror which are linearly displaced so that the laser beam exits said terminal slit by progressively moving along said terminal slit, the machining head being maintained in a fixed position during laser machining of said rectilinear groove in said mechanical part.

3. Engraving method according to claim 1 or 2, **characterised in that** said optical fibre laser device functions in a quasicontinuous wave mode.

4. Engraving method according to claim 3, **characterised in that** said laser pulses have a peak power comprised between 400W and 3000W (3kW).

5. Engraving method according to claim 1 or 2, **characterised in that** said optical fibre laser device is controlled in a trigger mode (Q Switch).

6. Engraving method according to claim 1 or 2, **characterised in that** said optical fibre laser device comprises an initial laser pulse source (Seed Laser) and at least one optical fibre amplification means, providing said laser pulses as an output.

7. Engraving method according to claim 5 or 6, **characterised in that** said laser device is controlled in such a way that the duration of said laser pulses is between 50ns and 400ns.

8. Engraving method according to one of claims 5 to 7, **characterised in that** said optical fibre laser device is controlled in such a way as to provide said laser pulses with a peak power that is greater than 1000W (1kW).

9. Engraving method according to one of claims 5 to 8, **characterised in that** said optical fibre laser device is controlled in such a way as to provide said laser pulses with a frequency comprised between 10kHz and 200kHz.

10. Engraving method according to one of the preceding claims, **characterised in that** a low-mode optical cable is provided between said laser device and a machining head at which said laser pulses are provided.
